# EUROPEAN PATENT APPLICATION

(11) **EP 4 156 379 A1**
(43) Date of publication of application: **29.03.2023**
(21) Application number: 22187857.2
(22) Date of filing: 29.07.2022
(51) Int. Cl.: H01M 10/613, H01M 10/625, H01M 10/6551, H01M 10/6556, H01M 10/6567, H01M 50/209, H01M 50/204

(54) **POWER STORAGE DEVICE**

(30) Priority: 24.09.2021 JP 2021155389
(71) Applicant: TOYOTA JIDOSHA KABUSHIKI KAISHA, Toyota-shi, Aichi-ken, 471-8571 (JP)
(72) Inventor: MORI, Shinichiro, TOYOTA-SHI, AICHI-KEN, 471-8571 (JP)
(74) Representative: Cabinet Beau de Loménie

(57) **Abstract**

A power storage device includes a lower case (22) including a bottom (23), a cooler (30) provided below the bottom (23) and including a top surface (30a) facing the bottom (23), and a heat conductive layer (40) provided between the bottom (23) and the top surface (30a). The top surface (30a) includes a pair of raised portions (34), the raised portions (34) being provided away from each other and raised toward the bottom (23), and a protrusion (35) provided between the raised portions (34) and protruding toward the bottom (23).

## Description

### 1. Field of the Invention

The present disclosure relates to a power storage device mounted on a vehicle.

### 2. Description of Related Art

As a related power storage device, Japanese Unexamined Patent Application Publication No. 2020-053148 (JP 2020-053148 A) discloses a structure in which a power storage stack and a cooler are provided in a housing case and a heat conductive material is provided between the power storage stack and the cooler. The heat conductive material is composed of gelled grease. Even if the external dimensions (more specifically, height dimensions) of multiple power storage cells in the power storage stack vary, the gelled grease deforms in conformity with the variation. Therefore, close contact between the cooler and the power storage stack can be improved.

### SUMMARY OF THE INVENTION

In JP 2020-053148 A, the cooler is provided inside the housing case. Research has been conducted on a structure in which the cooler is provided outside the housing case unlike the structure in JP 2020-053148 A. In such a case, the bottom of a lower case and the top surface of the cooler may be brought into thermally close contact with each other via a heat conductive layer.

When the top surface of the cooler has a raised portion, however, the heat conductive layer is difficult to spread at the end of the raised portion, and the thickness of the heat conductive layer decreases. In such a case, a gap is formed between the cooler and the power storage stack. Therefore, it is difficult to seal the space between the cooler and the power storage stack. When the cooler is provided outside the lower case, a liquid such as water is likely to enter the gap. Therefore, the cooler or the lower case is likely to be rusted by the liquid.

The present disclosure provides a power storage device with an increased filling property of a heat conductive layer provided between a lower case and a cooler provided outside the lower case.

A power storage device according to the present disclosure includes a lower case including a bottom, a cooler provided below the bottom and including a top surface facing the bottom, and a heat conductive layer provided between the bottom and the top surface. The top surface includes a pair of raised portions, the raised portions being provided away from each other and raised toward the bottom, and a protrusion provided between the raised portions and protruding toward the bottom.

According to the structure described above, the protrusion is provided between the raised portions. Therefore, when the heat conductive layer is sandwiched between the bottom of the lower case and the top surface of the cooler, the heat conductive layer is spread by the protrusion toward the raised portions. As a result, the space between the ends of the raised portions close to the protrusion and the bottom of the lower case can be filled with the heat conductive layer.

In the power storage device according to the present disclosure, the bottom may include a recess that is recessed toward a space between the raised portions.

According to the structure described above, the heat conductive layer provided between the raised portions can be spread by the recess. Therefore, the space between the ends of the raised portions close to the protrusion and the bottom of the lower case can be filled with the heat conductive layer more reliably.

In the power storage device according to the present disclosure, the top surface may include a first planar portion provided between the raised portions. Each of the raised portions may include a second planar portion positioned close to the bottom as compared with the first planar portion, and a connecting surface connecting the second planar portion and the first planar portion to each other. In this case, the recess may include a bottom plate facing the first planar portion in parallel to the first planar portion, and a side wall facing the connecting surface in parallel to the connecting surface.

According to the structure described above, the space between the first planar portion and the bottom plate and the spaces between the connecting surfaces and the side walls can be filled with the heat conductive layer while keeping a constant distance between the first planar portion and the bottom plate and between the connecting surfaces and the side walls.

In the power storage device according to the present disclosure, the protrusion may be provided between the connecting surfaces that are adjacent to each other.

In the power storage device according to the present disclosure, the protrusion may protrude toward the bottom plate.
The protrusion may include a top end facing the bottom plate.
In a direction perpendicular to the first planar portion, a distance between the bottom plate and the top end may be shorter than a distance between the bottom plate and the first planar portion.

In the power storage device according to the present disclosure, the protrusion may protrude toward the bottom plate.
The protrusion may include a top end facing the bottom plate.
The top end may be provided at a position lower than a position of the second planar portion.

In the power storage device according to the present disclosure, the protrusion may include a top end facing the bottom. In this case, a width of the top end in an orthogonal direction that is orthogonal to a direction in which the raised portions are arrayed may be smaller than a width of the heat conductive layer in the orthogonal direction.

According to the structure described above, the heat conductive layer can be spread toward the raised portions more reliably.

The power storage device according to the present disclosure may include a power storage stack including multiple power storage cells arrayed in a first direction. The power storage stack may be provided on an opposite side of the bottom from the cooler, and may be in thermal contact with the bottom. In this case, the cooler may include a cooling portion extending in the first direction and configured to cool the power storage stack, a pair of holding portions, the holding portions being provided away from each other in the first direction and holding the cooling portion, and a connecting portion connecting the holding portions to each other. Each of the holding portions may include a first end on one side in a second direction parallel to the top surface and orthogonal to the first direction. In this case, the connecting portion may connect the first end of one of the holding portions to the first end of the other one of the holding portions, and the raised portions and the protrusion may be provided on the connecting portion.

According to the structure described above, the space between the cooler (more specifically, the connecting portion) and the bottom of the lower case on the one side in the second direction can be filled with the heat conductive layer. Therefore, it is possible to suppress entry of a liquid from the one side in the second direction to the space between the cooler and the bottom. Particularly when the power storage device is mounted on a vehicle so that the one side in the second direction corresponds to a front side of the vehicle, a liquid splashed by front wheels is likely to come into contact with the connecting portion located on the one side in the second direction. Even in such a case, entry of the liquid between the cooler and the bottom can be suppressed because the space between the connecting portion and the bottom is filled with the heat conductive layer. As a result, corrosion of the bottom or the connecting portion can be suppressed.

In the power storage device according to the present disclosure, a width of the protrusion in an orthogonal direction that is orthogonal to a direction in which the raised portions are arrayed may be larger than a width of the heat conductive layer in the orthogonal direction.

In the power storage device according to the present disclosure, a width of the protrusion in an orthogonal direction that is orthogonal to a direction in which the raised portions are arrayed may be smaller than a width of the heat conductive layer in the orthogonal direction.

According to the present disclosure, it is possible to provide the power storage device with the increased filling property of the heat conductive layer provided between the lower case and the cooler provided outside the lower case.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a vehicle including a power storage device according to an embodiment;
FIG. 2 is an exploded perspective view of the power storage device according to the embodiment;
FIG. 3 is an exploded perspective view of a cooler and a lower case of the power storage device according to the embodiment when viewed from the bottom side of the lower case;
FIG. 4 is an exploded perspective view of the lower case and the cooler, showing an enlarged view of the vicinity of a pair of raised portions of the cooler in the power storage device according to the embodiment;
FIG. 5 is a diagram showing a state of a heat conductive layer before sandwiched between the cooler and the lower case in the power storage device according to the embodiment;
FIG. 6 is a diagram showing how the heat conductive layer applied in FIG. 5 is sandwiched between the bottom of the lower case and the cooler;
FIG. 7 is a sectional view showing a state in which the heat conductive layer is sandwiched between the cooler and the lower case in the power storage device according to the embodiment;
FIG. 8 is a plan view showing the state in which the heat conductive layer is sandwiched between the cooler and the lower case in the power storage device according to the embodiment; and
FIG. 9 is a plan view showing a modification of the state in which the heat conductive layer is sandwiched between the cooler and the lower case.

### DETAILED DESCRIPTION OF EMBODIMENTS

An embodiment of the present disclosure will be described in detail below with reference to the drawings. In the embodiment described below, the same or common parts are represented by the same reference symbols in the drawings, and description thereof will not be repeated.

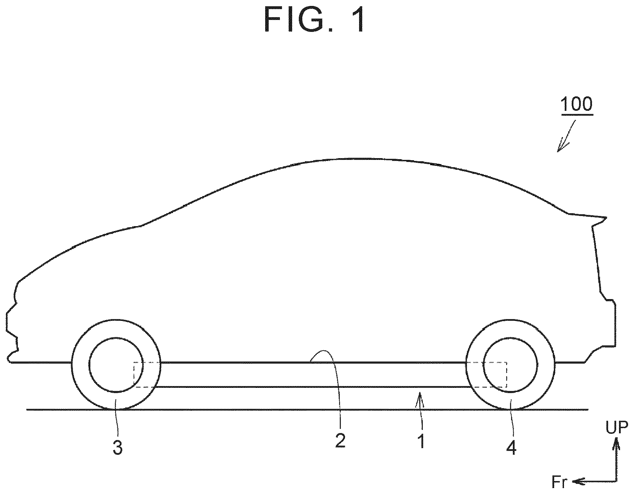

FIG. 1 is a diagram showing a vehicle including a power storage device according to the embodiment. A vehicle 100 according to the embodiment will be described with reference to FIG. 1.

The vehicle 100 according to the embodiment includes a power storage device 1, and can travel by using electric power stored in the power storage device 1. The vehicle 100 includes a floor panel 2, front wheels 3, and rear wheels 4. The power storage device 1 is mounted below the floor panel 2. The front end of the power storage device 1 is positioned close to the front wheels 3. The front end of the power storage device 1 may overlap the front wheels 3 when viewed in a width direction of the vehicle.

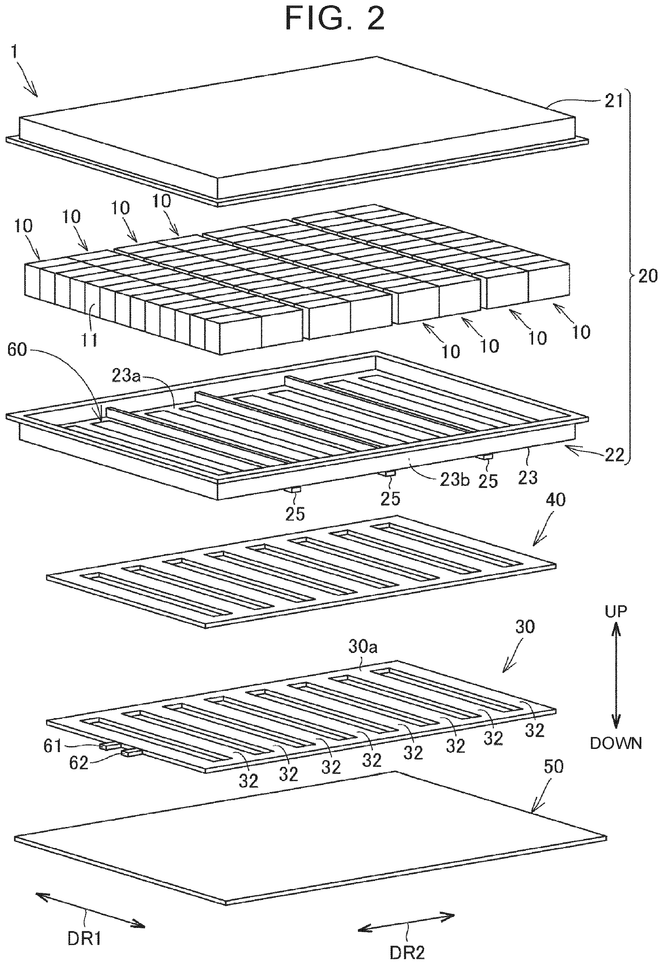

FIG. 2 is an exploded perspective view of the power storage device according to the embodiment. The power storage device 1 according to the embodiment will be described with reference to FIG. 2.

As shown in FIG. 2, the power storage device 1 according to the embodiment includes a plurality of power storage stacks 10, a housing case 20, a cooler 30, a heat conductive layer 40, a share panel 50, and an inner heat conductive layer 60.

Each of the power storage stacks 10 includes multiple power storage cells 11 arrayed in a first direction (direction DR1). The first direction is parallel to the width direction of the vehicle in a state in which the power storage device 1 is mounted on the vehicle 100.

The power storage cell 11 is a secondary battery such as a nickel metal hydride battery or a lithium ion battery. The power storage cell 11 has, for example, a square shape. The power storage cell 11 may use a liquid electrolyte or a solid electrolyte. The power storage cell 11 may be a unit capacitor configured to store electric power.

The power storage stacks 10 are juxtaposed in a vertical direction and in a second direction (direction DR2) orthogonal to the first direction. The second direction is parallel to a fore-and-aft direction of the vehicle in the mounted state.

The housing case 20 houses the power storage stacks 10. The housing case 20 includes an upper case 21 and a lower case 22.

The upper case 21 has a substantial box shape that is open downward. The upper case 21 may be made of a metal material. To reduce the weight, the upper case 21 may be made of a resin material.

The lower case 22 has a substantial box shape that is open upward. The lower case 22 is made of a metal material. The lower case 22 preferably has good heat conductivity.

The lower case 22 includes a bottom 23. The power storage stacks 10 are placed on the bottom 23. The bottom 23 has an inner surface 23a and an outer surface 23b opposite to each other. The inner surface 23a faces the power storage stacks 10. The outer surface 23b faces opposite to the power storage stacks 10.

The bottom 23 includes a plurality of protrusions 25 protruding downward. The protrusions 25 are juxtaposed with intervals in the second direction. Each of the protrusions 25 enters a clearance between adjacent cooling portions 32 described later at a predetermined position. The protrusions 25 extend along the first direction.

The inner heat conductive layer 60 is provided between each power storage stack 10 and the inner surface 23a. The inner heat conductive layer 60 also functions as an adhesive layer to adhesively fix each power storage stack 10 to the bottom 23. Each power storage stack 10 is in thermal contact with the inner surface 23a by the inner heat conductive layer 60.

The inner heat conductive layer 60 is a resin member having heat conductivity. Examples of the inner heat conductive layer 60 include an adhesive containing a silicone resin, an acrylic resin, or an epoxy resin.

The cooler 30 is a device for cooling the power storage stacks 10. The cooler 30 includes a refrigerant channel through which a refrigerant flows. The refrigerant channel is connected to a refrigerant inlet 61 and a refrigerant outlet 62. The refrigerant introduced into the refrigerant channel through the refrigerant inlet 61 cools the power storage stacks 10, and is discharged through the refrigerant outlet 62.

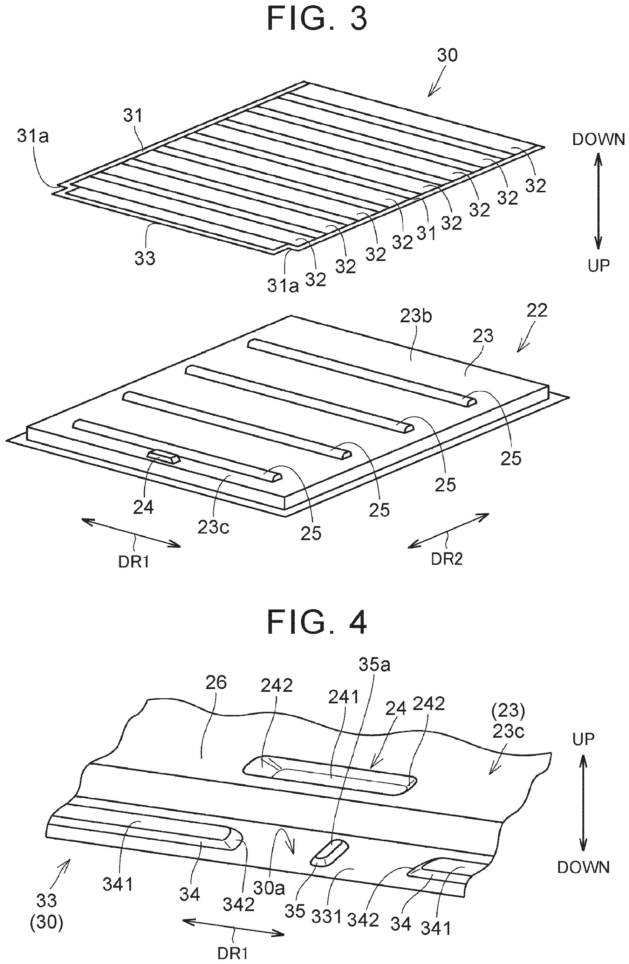

The cooler 30 is provided below the bottom 23 of the lower case 22. The cooler 30 has a top surface 30a facing the bottom 23. The cooler 30 is made of a metal material such as aluminum. The detailed structure of the cooler 30 will be described later with reference to FIG. 3.

The heat conductive layer 40 is provided between the outer surface 23b of the bottom 23 and the top surface 30a of the cooler 30. The power storage stacks 10 are cooled by the cooler 30 via the heat conductive layer 40, the bottom 23, and the inner heat conductive layer 60. The heat conductive layer 40 also functions as an adhesive layer for bonding the bottom 23 and the cooler 30. Examples of the heat conductive layer 40 include an adhesive containing a silicone resin, an acrylic resin, or an epoxy resin.

The share panel 50 covers the protrusions 25 and the cooler 30 from the bottom. The share panel 50 protects the cooler 30 and suppresses water contact with the cooler 30. The share panel 50 is made of a metal material.

FIG. 3 is an exploded perspective view of the cooler and the lower case of the power storage device according to the embodiment when viewed from the bottom side of the lower case. In FIG. 3, the vertical direction is reversed.

As shown in FIG. 3, the cooler 30 includes a pair of holding portions 31, a plurality of cooling portions 32, and a connecting portion 33. The refrigerant channel is provided inside the holding portions 31, the cooling portions 32, and the connecting portion 33.

The holding portions 31 extend along the second direction. Each of the holding portions 31 has a first end 31a on one side in the second direction. The holding portions 31 are provided away from each other in the first direction. The holding portions 31 hold the cooling portions 32.

The cooling portions 32 are provided at positions corresponding to the positions of the power storage stacks 10 on a one-to-one basis. The cooling portions 32 are provided as many as the power storage stacks 10. Each of the cooling portions 32 connects the holding portions 31 in the first direction. The cooling portions 32 are juxtaposed with intervals in the second direction.

The connecting portion 33 connects the holding portions 31 to each other. Specifically, the connecting portion 33 connects the first ends 31a of one of the holding portions 31 to the first end 31a of the other one of the holding portions 31. The connecting portion 33 is configured as a first end of the cooler 30. The connecting portion 33 has a substantial C-shape. A clearance is secured between the connecting portion 33 and the cooling portion 32 located on one side in the second direction among the plurality of cooling portions 32. The connecting portion 33 includes the refrigerant inlet 61 and the refrigerant outlet 62.

The bottom 23 of the lower case 22 includes a facing portion 23c that faces the connecting portion 33. The facing portion 23c has a recess 24 that is recessed toward a space between a pair of raised portions 34 (see FIG. 4) described later.

FIG. 4 is an exploded perspective view of the lower case and the cooler, showing an enlarged view of the vicinity of the raised portions 34 in the power storage device according to the embodiment.

The top surface 30a of the cooler 30 includes the raised portions 34 and a protrusion 35. The raised portions 34 are provided on the connecting portion 33. The raised portions 34 are provided away from each other in the first direction. The raised portions 34 are raised toward the bottom 23. The inside of each of the raised portions 34 is a cavity, and the cavity defines the refrigerant channel through which the refrigerant flows.

The top surface 30a of the cooler 30 includes a first planar portion 331 provided between the raised portions 34. The first planar portion 331 is substantially parallel to the first direction and the second direction.

Each of the raised portions 34 includes a second planar portion 341 and a connecting surface 342. The second planar portion 341 is positioned close to the bottom 23 as compared with the first planar portion 331. The height position of the second planar portion 341 is higher than that of the first planar portion 331. The second planar portion 341 is substantially parallel to the first direction and the second direction. The connecting surface 342 connects the second planar portion 341 and the first planar portion 331 to each other. Specifically, the connecting surface 342 connects the first planar portion 331 and the end of the second planar portion 341 close to the protrusion 35 to each other. The connecting surface 342 faces the protrusion 35. The connecting surface 342 has a substantially tapered shape.

The protrusion 35 is provided on the connecting portion 33. The protrusion 35 is provided between the raised portions 34. The protrusion 35 protrudes toward the bottom 23. The protrusion 35 has a top end 35a facing the bottom 23 (more specifically, a bottom plate 241). The top end 35a is flat.

The protrusion 35 is provided between the connecting surfaces 342 that are adjacent to each other. The top end 35a is provided at a position lower than that of the second planar portion 341.

The facing portion 23c includes a plate portion 26 and the recess 24. The plate portion 26 faces the second planar portions 341. The plate portion 26 is substantially parallel to the second planar portions 341.

The recess 24 includes the bottom plate 241 and a pair of side walls 242. The bottom plate 241 faces the first planar portion 331. The bottom plate 241 is parallel to the first planar portion 331. The side walls 242 connect the bottom plate 241 and the plate portion 26 to each other. More specifically, the side wall located on one side in the first direction out of the pair of side walls 242 connects one end of the bottom plate 241 in the first direction to the plate portion 26. The side wall located on the other side in the first direction out of the pair of side walls 242 connects the other end of the bottom plate 241 in the first direction to the plate portion 26. The side walls 242 face the connecting surfaces 342 of the raised portions 34. The side walls 242 are parallel to the connecting surfaces 342 of the raised portions 34.

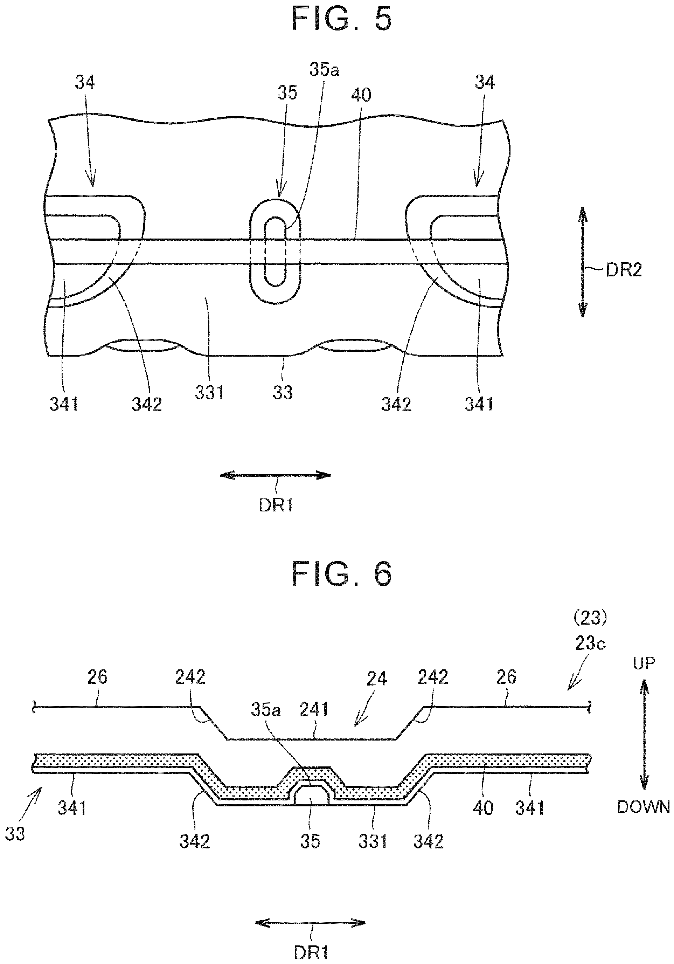

FIG. 5 is a diagram showing a state of the heat conductive layer before sandwiched between the cooler and the lower case in the power storage device according to the embodiment.

As shown in FIG. 5, the heat conductive layer 40 before sandwiched between the cooler 30 and the lower case 22 is applied along the first direction in the connecting portion 33 to overlap the second planar portions 341, the first planar portion 331, and the top end 35a of the protrusion 35. The heat conductive layer 40 may be applied to the top surface 30a of the cooler 30 or to the outer surface 23b of the bottom 23 at a part corresponding to the top surface 30a. Before the heat conductive layer 40 is sandwiched, the width of the heat conductive layer 40 in the second direction may be smaller than the widths of the raised portions 34 and the width of the protrusion 35 in the second direction. More specifically, before the heat conductive layer 40 is sandwiched, the width of the heat conductive layer 40 may be smaller than the width of the top end 35a of the protrusion 35.

FIG. 6 is a diagram showing how the heat conductive layer applied in FIG. 5 is sandwiched between the bottom of the lower case and the cooler.

As shown in FIG. 6, the lower case 22 and the cooler 30 are provided so that the plate portion 26, the side walls 242, and the bottom plate 241 face the second planar portions 341, the connecting surface 342, and the first planar portion 331, respectively, and the lower case 22 is relatively moved so that the lower case 22 and the cooler 30 are made close to each other. In this manner, the heat conductive layer 40 is sandwiched between the bottom 23 and the top surface 30a of the cooler 30.

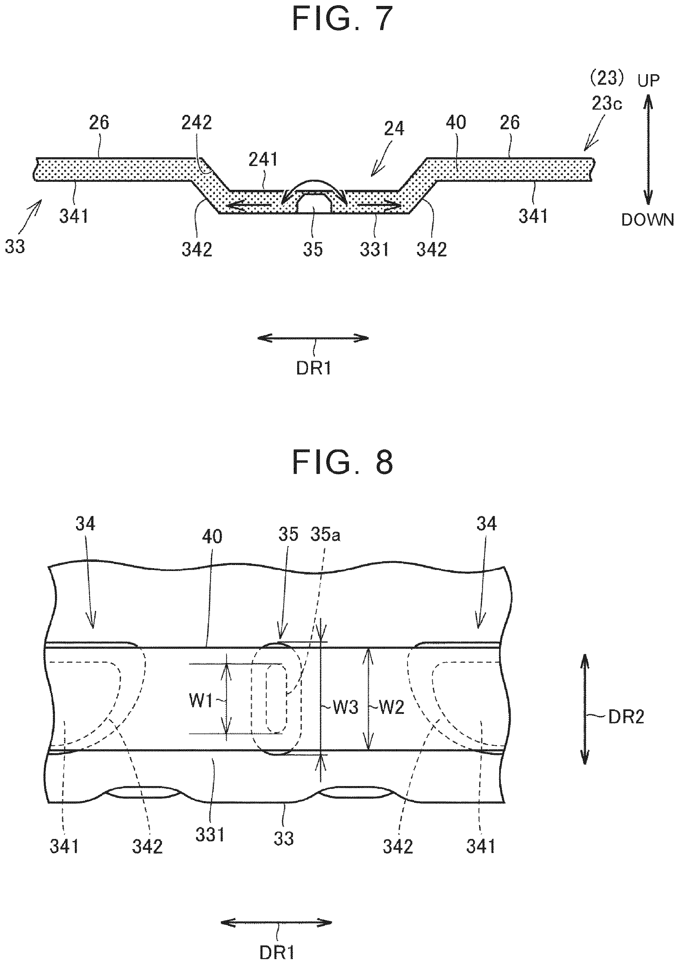

FIGS. 7 and 8 are a sectional view and a plan view showing a state in which the heat conductive layer is sandwiched between the cooler and the lower case in the power storage device according to the embodiment. In FIG. 8, the lower case is omitted for convenience. By being sandwiched between the cooler 30 and the lower case 22, the heat conductive layer 40 is formed between the bottom 23 and the top surface 30a of the cooler 30.

When the heat conductive layer 40 is sandwiched between the bottom 23 of the lower case 22 and the top surface 30a of the cooler 30 as shown in FIG. 7, the heat conductive layer 40 is spread by the protrusion 35 toward the connecting surfaces 342 of the raised portions 34 as indicated by arrows in FIG. 7 because the protrusion 35 is provided between the raised portions 34. As a result, the space between the ends of the raised portions 34 close to the protrusion 35 and the bottom 23 of the lower case 22 can be filled with the heat conductive layer 40.

Since the recess 24 that is recessed toward the space between the raised portions 34 is provided in the bottom 23, the heat conductive layer 40 provided between the raised portions 34 can further be spread by the recess 24. As a result, the space between the ends of the raised portions 34 close to the protrusion 35 and the bottom 23 of the lower case 22 can be filled with the heat conductive layer 40 more reliably.

The bottom plate 241 of the recess 24 faces the first planar portion 331 in parallel to the first planar portion 331, and the side walls 242 of the recess face the connecting surfaces 342 in parallel to the connecting surfaces 342. Thus, the space between the first planar portion 331 and the bottom plate 241 and the spaces between the connecting surfaces 342 and the side walls 242 can be filled with the heat conductive layer 40 while keeping a constant distance between the first planar portion 331 and the bottom plate 241 and between the connecting surfaces 342 and the side walls 242. That is, the thickness of the heat conductive layer 40 can be made constant.

The protrusion 35 protrudes toward the bottom plate 241. The protrusion 35 has the top end 35a facing the bottom plate 241. The distance between the bottom plate 241 and the top end 35a is shorter than the distance between the bottom plate 241 and the first planar portion 331 in a direction perpendicular to the first planar portion 331.

In the state in which the heat conductive layer 40 is sandwiched as shown in FIG. 8, a width W1 of the top end 35a in an orthogonal direction (second direction) that is orthogonal to the direction in which the raised portions 34 are arrayed (first direction) is smaller than a width W2 of the heat conductive layer 40 in the orthogonal direction. By forming the protrusion 35 in such a length relationship, the heat conductive layer 40 can be spread toward the raised portions 34 more reliably.

In the state in which the heat conductive layer 40 is sandwiched, a width W3 of the protrusion 35 in the orthogonal direction may be larger than the width W2 of the heat conductive layer 40 in the orthogonal direction. In the case where the width W3 and the width W2 have such a relationship, the filling property of the heat conductive layer 40 between the cooler 30 and the bottom 23 can be increased while reducing the application amount of the heat conductive layer 40. As a result, the manufacturing cost can also be reduced.

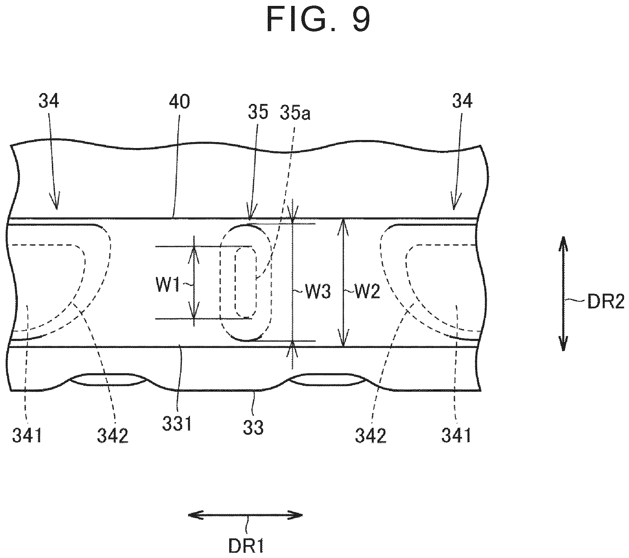

FIG. 9 is a plan showing a modification of the state in which the heat conductive layer is sandwiched between the cooler and the lower case.

In the state in which the heat conductive layer 40 is sandwiched as shown in FIG. 9, the width W3 of the protrusion 35 may be smaller than the width W2 of the heat conductive layer 40. In this case, the heat conductive layer 40 can be spread toward the raised portions 34 more reliably by increasing the application amount of the heat conductive layer 40. Thus, the filling property of the heat conductive layer 40 between the cooler 30 and the bottom 23 can be increased more reliably.

As described above, the power storage device 1 is mounted on the vehicle 100 so that the connecting portion 33 on one side in the second direction is positioned on the front side of the vehicle. In this state, the connecting portion 33 is provided in the vicinity of the front wheels 3 of the vehicle, and a liquid splashed by the front wheels is likely to come into contact with the connecting portion 33. Even in such a case, entry of the liquid between the cooler 30 and the bottom 23 can be suppressed because the space between the connecting portion 33 and the bottom 23 is filled with the heat conductive layer 40 as described above. As a result, corrosion of the bottom 23 or the connecting portion 33 can be suppressed.

The embodiment disclosed herein is illustrative and not restrictive in all respects. The scope of the present disclosure is defined by the claims and includes all modifications within the meaning and scope equivalent to those of the claims.

## Claims

1. A power storage device comprising:
a lower case (22) including a bottom (23);
a cooler (30) provided below the bottom (23) and including a top surface (30a) facing the bottom (23); and
a heat conductive layer (40) provided between the bottom (23) and the top surface (30a), wherein the top surface (30a) includes a pair of raised portions (34), the raised portions (34) being provided away from each other and raised toward the bottom (23), and a protrusion (35) provided between the raised portions (34) and protruding toward the bottom (23).

2. The power storage device according to claim 1, wherein the bottom (23) includes a recess (24) that is recessed toward a space between the raised portions (34).

3. The power storage device according to claim 2, wherein:
the top surface (30a) includes a first planar portion (331) provided between the raised portions (34);
each of the raised portions (34) includes a second planar portion (341) positioned close to the bottom (23) as compared with the first planar portion (331), and a connecting surface (342) connecting the second planar portion (341) and the first planar portion (331) to each other; and
the recess (24) includes a bottom plate (241) facing the first planar portion (331) in parallel to the first planar portion (331), and a side wall (242) facing the connecting surface (342) in parallel to the connecting surface (342).

4. The power storage device according to claim 3, wherein the protrusion (35) is provided between the connecting surfaces (342) that are adjacent to each other.

5. The power storage device according to claim 3, wherein:
the protrusion (35) protrudes toward the bottom plate (241);
the protrusion (35) includes a top end (35a) facing the bottom plate (241); and
in a direction perpendicular to the first planar portion (331), a distance between the bottom plate (241) and the top end (35a) is shorter than a distance between the bottom plate (241) and the first planar portion (331).

6. The power storage device according to claim 3, wherein:
the protrusion (35) protrudes toward the bottom plate (241);
the protrusion (35) includes a top end (35a) facing the bottom plate (241); and
the top end (35a) is provided at a position lower than a position of the second planar portion (341).

7. The power storage device according to any one of claims 1 to 6, wherein:
the protrusion (35) includes a top end (35a) facing the bottom (23); and
a width of the top end (35a) in an orthogonal direction that is orthogonal to a direction in which the raised portions (34) are arrayed is smaller than a width of the heat conductive layer (40) in the orthogonal direction.

8. The power storage device according to any one of claims 1 to 7, further comprising a power storage stack (10) including multiple power storage cells (11) arrayed in a first direction, wherein:
the power storage stack (10) is provided on an opposite side of the bottom (23) from the cooler (30), and is in thermal contact with the bottom (23);
the cooler (30) includes a cooling portion (32) extending in the first direction and configured to cool the power storage stack (10), a pair of holding portions (31), the holding portions (31) being provided away from each other in the first direction and holding the cooling portion (32), and a connecting portion (33) connecting the holding portions (31);
each of the holding portions (31) includes a first end (31a) on one side in a second direction parallel to the top surface (30a) and orthogonal to the first direction;
the connecting portion (33) connects the first end (31a) of one of the holding portions (31) to the first end (31a) of the other one of the holding portions (31); and
the raised portions (34) and the protrusion (35) are provided on the connecting portion (33).

9. The power storage device according to any one of claims 1 to 8, wherein a width of the protrusion (35) in an orthogonal direction that is orthogonal to a direction in which the raised portions (34) are arrayed is larger than a width of the heat conductive layer (40) in the orthogonal direction.

10. The power storage device according to any one of claims 1 to 8, wherein a width of the protrusion (35) in an orthogonal direction that is orthogonal to a direction in which the raised portions (34) are arrayed is smaller than a width of the heat conductive layer (40) in the orthogonal direction.
